# EUROPEAN PATENT SPECIFICATION

(11) **EP 3 336 371 B1**
(45) Date of publication and mention of the grant of the patent: **30.10.2019**
(21) Application number: 16203628.9
(22) Date of filing: 13.12.2016
(51) Int. Cl.: F16C 33/72, F16C 33/78, F16C 11/06, A01D 34/00, B60B 7/00

(54) **BEARING SEAL**
LAGERDICHTUNG
JOINT DE PALIER

(43) Date of publication of application: 20.06.2018
(73) Proprietor: Internordic Bearings AB, 571 22 Nässjö (SE)
(72) Inventor: Jonestad, Torbjörn, 571 95 Nässjö (SE)
(74) Representative: AWA Sweden AB

(56) References cited:
- EP-A1- 2 909 493
- EP-A2- 1 426 257
- DE-U1-202012 104 506
- JP-A- 2002 021 982
- JP-A- 2005 337 383
- US-A1- 2013 104 511
- US-A1- 2016 288 567

## Description

### Technical Field

The present disclosure relates to a bearing and more specifically to a sealing device of a bearing.

### Background

In the field of bearings, sealing devices commonly used to protect the bearing from damage by contaminants such as liquids or particles which may penetrate the bearing and cause damage to the rotating members of the bearing or to the bearing rings and decrease the service life of the bearing. In sealing devices, the use of a combination of an inner and second seal is common. The seals may be separate units like in EP 2 909 493 A1 as in prior art solutions such as WO1006938A1, the inner ring of the bearing also forms the second seal. Other common solutions are labyrinth solutions where the inner and second seal interact by annular elevations and depressions in the seals.

Arrangements such as these alleviate the problem with contaminants in the bearings to some extent, but there is still a need to further alleviate this problem. Further problems include the complexity in production and mounting and the resulting additional costs.

Hence, to improve the bearing's function and service life, there is a need for an improved sealing device which protects the bearing from contaminants and is simple and inexpensive to mount to the bearing.

### Summary

It is an object of the present invention to provide an improved solution that alleviates the mentioned drawbacks with present devices.

The invention is defined by the appended independent claims, with embodiments being set forth in the dependent claims, in the following description and in the attached drawings.

According to a first aspect of the invention, there is provided a bearing comprising an inner ring, an outer ring, and intermediate rotational means. The bearing further comprises a sealing device which comprises a first seal, fitted between the inner and the outer ring of the bearing, and comprises an axially extending annular lip, and a second seal. The bearing is characterized in that the second seal comprises a through shaft portion extending into a bore of the inner ring, a radial portion extending along the radial extension of the bearing, covering the inner ring and at least part of the first seal, and an annular groove arranged to interact with the annular lip of the first seal so as to create a labyrinth seal between the first and second seal, wherein the labyrinth seal seals a pocket between the inner ring, the second seal, and the first seal.

With this arrangement the bearing's service life is prolonged as the sealing device protects the bearing from contaminants entering into the bearing during rotation. The through shaft extending portion provides a distance to fit the bearing to an axle as well as protects the bore of the inner ring. The labyrinth seal protects the bearing from any contaminants entering into the bearing by way between the inner ring and the first seal. Particles and contaminants such as gravel, sand, grass, liquids or other contaminants which may cause wear, tear, and malfunction of the rotational means in the bearing, shortening the service life, may be prevented from entering into the pocket between the first and second seal and the inner ring by the lip in the first seal and the groove in the second seal, which create the labyrinth seal. Any contaminants are thus kept out of the pocket.

The pocket may further contain a lubricant. Filling the pocket with lubricant may provide a barrier that prevents any contaminants from entering into the pocket from by passing through the labyrinth seal.

The radial portion of the second seal may covers at least 50%-, or at least 70%, or preferably 75-95% of the first seal. The radial portion protects the bearing from contaminants and extends to cover part of the first seal but thus far only as not to cover an inner edge of the outer ring and by that assures that contaminants will not stick in the axially extending gap that otherwise would arise between the second seal and the outer ring.

The first seal may be constructed of an inner metal core and wherein the metal core may be at least partly covered by a flexible material such as a polymer material. The first seal having a core of a metal such as steel, provides stability and rigidness to the first seal. The flexible material covering the core, provides a tight fit between the seal and the inner and outer rings to keep out any contaminants. The seal may be made from a polymer such as polyurethane or any other an elastomer or rubber material.

The second seal may be constructed of a metal, steel, hard plastic, or ceramic material. The second seal being made of a robust and durable material such as steel, a steel-alloy, ceramics, metal or ridged plastic, ensures that the sealing will be resistant to high loads and stresses. Being resistant to high loads and stresses allows for the sealing to remain intact and keep any contaminants from entering into the seal.

The second seal may be a bushing. The shaft of the bushing may extend through the bore of the bearing, allowing for protection of the inner ring.

The second seal being a bushing may comprise a through-hole for receiving an axle adapted to be rotated in a rotational direction of the bearing.

The first seal may be rotatably arranged relative the inner ring and second seal and fixedly arranged relative the outer ring. The first seal being rotatably attached to the inner ring signifies that contaminants may enter into the bearing during rotation unless this area is protected from contaminants. According to the invention the labyrinth seal seals such that contaminants are prohibited from entering into the pocket and thus further into the bearing. The first seal being fixedly arranged to the outer ring signifies that the event of contaminants entering into the bearing through the contact surface between the first seal and the outer ring is unlikely.

The second seal may be fixedly attached to the inner ring, such that any rotational force exerted onto the second seal is transferred to the inner ring. The second seal being fixedly attached to the inner ring may cause simultaneous rotation of the second seal and the inner ring. The second seal may be caused to rotate by rotational force from the axle adapted to be received in the through-hole of the bushing.

The second seal may be rotatably arranged relative the outer ring and the first seal. The second seal may cover at least part of the first seal and rotate in relation to the outer ring and the first seal as a rotational force is transferred from an axle to the second seal.

The sealing device may be form-fitted to the inner ring. The sealing device may further be form-fitted to the inner ring by means of the second seal's through shaft portion having an outer diameter being adapted to be form-fitted into the inner diameter of the inner ring's bore. The second seal being form-fitted ensures a fixed connection between the inner ring and the second seal. Form-fitting ensures the positions of the two parts relative each other do not deviate or vary during rotation or load and further ensures transfer of rotational movement.

The annular groove of the second seal may be placed on an inner surface, facing the first seal, of the radial extension portion of the second seal. The inner surface of the radial extension portion of the second seal faces the first seal such that the groove provides a receiving gap for the lip extending from the first seal, thus creating the labyrinth seal.

The radial extension of the second seal may have at least one portion being of frusta conical shape. The radial portion may have at least one portion with increasing material thickness towards the center axis of the second seal when seen from the outer radial end of the second seal. The frusta conical shape assists in preventing contaminants from entering underneath the second seal by providing an area which during rotation thrusts the contaminants away from the bearing.

The second seal's through shaft portion may extend at least into 40% of the total length of the inner ring's bore, preferably at least 70% of the total length of the inner ring's bore and most preferably at least 90 % of the total length of the inner ring's bore. The through shaft portion may provide support and stability to the bearing during rotation by extending through the bore of the bearing. The through shaft may further provide protection of the inner ring from a rotating axle and serve as a distance between the inner ring an axle to assure that there is no relative rotation between inner ring, the axle and the second seal.

The bearing may further comprise a third seal being fitted between the inner and outer ring of the bearing, and on an opposite axial side of the first sealing, and further comprising and a fourth seal having a through shaft portion extending into the bore of the inner ring, a radial portion extending along the radial extension of the bearing and being arranged on an opposite axial side of the second sealing, wherein the fourth seal comprise an annular groove arranged to interact with an annular lip of the third seal so as to create a labyrinth seal between the third and fourth seal.

In one embodiment, the third seal comprises features of the first seal and the fourth seal comprises features of the second seal. The third and fourth seal may be symmetrically arranged relative the first and second seal around a center radial axis of the bearing. Providing seals on both sides of the bearing may provide protection from contaminants entering into the bearing, irrespective of the orientation and positioning of the bearing.

According to another aspect of the invention, a use of a bearing according to the invention as disclosed is provided, wherein the bearing is oriented in a substantially horizontal orientation allowing substantially vertical rotations of an axle placed in the through hole of the second seal, wherein the radial portion of the second seal is arranged to protect the top portion of the bore, when in use. Arranged in a horizontal orientation, the second seal is arranged on the portion exposed to the contaminated environment. In other applications, the bearing may be exposed to a contaminated environment on both sides of the bearing and the third and fourth seals may thus be needed to protect the bearing from contaminants to increase its service life.

The bearing as disclosed is not limited for use in horizontally oriented applications but may be used also in vertically or diagonally oriented applications.

According to another embodiment, a lawn mower comprising a bearing according to the present invention is provided. In dirty environments such as in a lawn mower, contaminants may enter into the bearing which reduces the service life of the bearing. A bearing with a seal, as disclosed in the present invention, ensures the lubricant may be maintained in the pocket created between the first and second seals, the inner ring, and labyrinth seal and thus increase the service life of the bearing. The use and application of the bearing is not limited to lawn mowers or similar machines but may be used in for example vehicles, industrial applications, or in any environment where the bearing may be exposed to contaminants.

### Brief Description of the Drawings

This and other aspects of the present invention will now be described more in detail, with reference to the appended drawings showing a currently preferred embodiment of the invention.
Figure 1 is a cross sectional view of a bearing provide with a sealing device.
Figure 2 is a cross sectional view of a bearing provided with two sealing devices.
Figure 3 is an exploded view of the bearing and seal sealing device according to one embodiment.

### Detailed Description

The present invention will be described more fully hereinafter with reference to the accompanying drawings. In the drawings, like numbers refer to like elements.

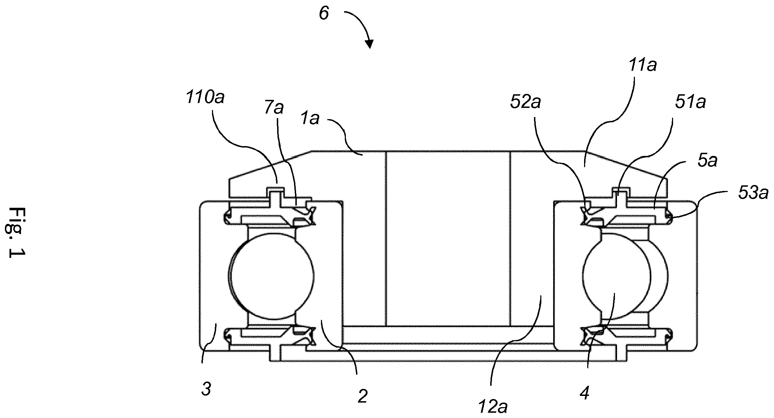

Figure 1 illustrates a cross sectional view of a bearing 6 with a sealing device according to the invention. The bearing 6 comprises an outer ring 3, an inner ring 2, and rolling means 4 located between the outer 3 and the inner ring 2. The bearing 6 further comprises a first seal 5a fitted between the rings 2, 3 such that the rolling members 4 are covered. The first seal 5a comprises a lip 51a which extends axially from the first seal 5a and forms an annular ring between the inner 2 and outer 3 rings. The first seal 5a further comprises a first edge 52a adapted to be rotatably attached to the inner ring 2 and a second edge 53a which is fixedly attached to the outer ring 3.

The first seal 5a is covered by a second seal 1a which has two portions extending perpendicular in relation to each other. A through shaft portion 12a of the second seal 1a, extends through the bore of the bearing 6 and is form-fitted into the inner ring 2. The through shaft portion 12a extends into at least 90% of the length of the bore in the illustrated embodiment.

A radial portion 11a of the second seal 1a, extends radially over the bearing 6 and covers the inner ring 2 and the first seal 5a up to the lip 51a and part of the first seal 5a between the lip 51a and towards an inner edge of the outer ring 3, covering preferably between 75-95% of the distance between the inner 2 and the outer 3 rings. The radial portion 11a of the second seal 1a further comprises a groove 110a which extends annularly on the side of the second seal 1a facing the bearing 6. The groove 110a is adapted to interact with the lip 51a of the first seal such that the rotation of the second seal 1a in relation to the first seal 5a will be guided by the lip 51a, and such that a labyrinth seal is created.

The interaction between the lip 51a of the first seal 5a and the groove 110a of the second seal forms the labyrinth seal. The labyrinth seal, the first seal 5a, the first ring 2, and the part of the radial portion 11a of the second seal 1a that extends between the inner ring 2 and the lip 51a forms a pocket 7a. The labyrinth seal provides a barrier that prevents contaminants from entering into the pocket 7a and further into the bearing 6. The pocket 7a may further be filled with lubricant. The lubricant may provide an extra protection in prohibiting contaminants such as particle or liquids from entering into the pocket 7a and from there into the bearing 6.

As illustrated, the second seal 1a has a first portion of the radial portion 11a that is frusta conical and has an increasing thickness towards the center axis of the second seal 1a. A second portion of the radial portion 11a that is closest to the central through-hole may be of constant thickness equal to the thickness of the thickest part of the first portion.

The second seal 1a may be manufactured in one piece. The second seal 1a is fixedly attached to the inner ring 2 such that the inner ring 2 and the second seal 1a rotates in simultaneous motion. The second seal 1a and the inner ring 2 may further be form-fitted such that there is no relative movement between the respective positions of the inner ring 2 and the second seal 1a.

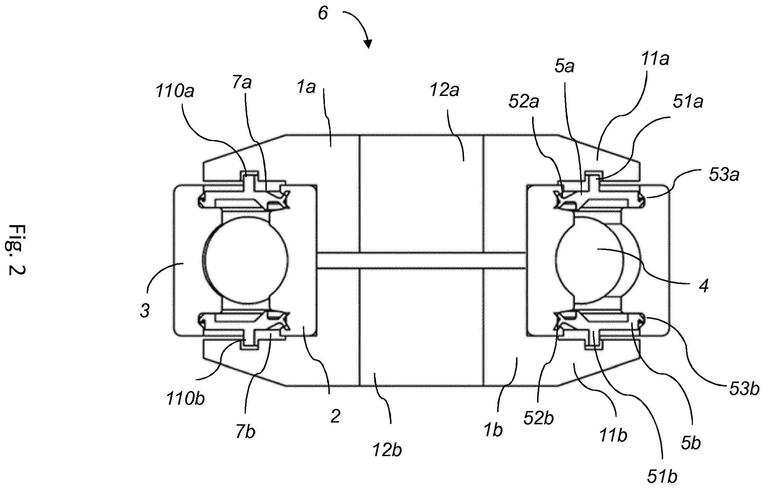

Further, in figure 2, a bearing 6 comprising sealing devices on both sides of the bearing 6 is illustrated. The bearing 6 has a first 5a and a second seal 1a on a first side and a third 5a and a fourth seal 1b on a second side. The third seal 5b equals the first seal 5a in form and function and the fourth seal 1b equals the second seal 1a in form and function, thus providing the same protection to both sides of the bearing 6.

The third seal 5b is fitted between the rings 2, 3 such that the rolling members 4 are covered in the same manner as the first seal 5a and comprises a lip 51b which extends axially from the third seal 5b and forms an annular ring between the inner and outer rings 2, 3. Further, the third seal 5b comprises a first edge 52b adapted to be rotatably attached to the inner ring 2 and a second edge 53b which is fixedly attached to the outer ring 3.

The third seal 5b is covered by a fourth seal 1b which has two portions extending perpendicular in relation to each other. A through shaft portion 12b of the second seal 1b, extends through the bore of the bearing 6 and is form-fitted into the inner ring 2. When two sealing devices are used, the through shaft portions 12a, 12b of the second 1a and fourth 1b seals are arranged to extend into between 40-50% of the length of the bore. A radial portion 11b of the fourth seal 1b, extends radially over the bearing 6 and covers the inner ring 2 and the third seal 5b up to the lip 51b and part of the third seal 5b between the lip 51b and towards an inner edge of the outer ring 3, covering preferably between 75-95% of the distance between the inner and the outer rings 2, 3. The radial portion 11b of the fourth seal 1b comprises a groove 110b which extends annularly on the side of the fourth seal 1b facing the bearing 6. The groove 110b is adapted to interact with the lip 51b of the third seal such that the rotation of the fourth seal 1b in relation to the first seal 5b will be guided by the lip 51b, and such that a labyrinth seal is created.

The labyrinth seal, the third seal 5b, the first ring 2, and the part of the radial portion 11b of the second seal 1b that extends between the inner ring 2 and the lip 51b forms a pocket 7b. The labyrinth seal provides a barrier that prevents contaminants from entering into the pocket 7b and further into the bearing 6. The pocket 7b may further be filled with lubricant. The lubricant may provide an extra protection in prohibiting contaminants such as particle or liquids from entering into the pocket 7b and from there into the bearing 6.

As for the second seal 1a, the fourth seal 1b also has a first portion of the radial portion 11b that is frusta conical and has an increasing thickness towards the center axis of the fourth seal 1b. A second portion of the radial portion 11b that is closest to the central through-hole may be of constant thickness equal to the thickness of the thickest part of the first portion.

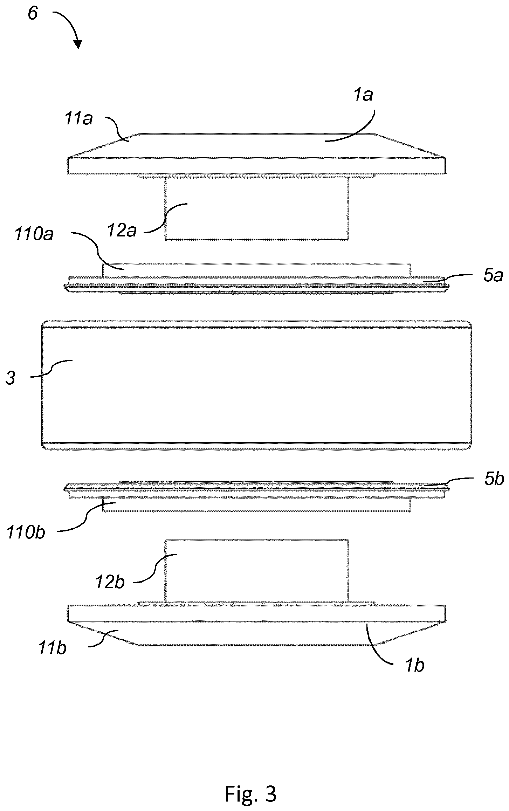

Figure 3 illustrates an exploded side-view of the bearing 6 with sealing devices according to the invention on both sides of the bearing 6. In the figure the second seal 1a is arranged on top, just over the first seal 5a. In the middle, the bearing 6 is illustrated by its outer ring 3, and under the bearing 6 the third sealing 5b and finally the fourth sealing 1b is illustrated on the bottom. This illustrates how the first 5a and third 5b sealings are arranged on the inside, towards the bearing, of the second 1a and fourth 1b sealing, respectively.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A bearing (6) comprising an inner ring (2), an outer ring (3) and intermediate rotational means (4), said bearing further comprising a sealing device which comprises
a first seal (5a) fitted between the inner and the outer ring of the bearing and comprising an axially extending annular lip (51a), and
a second seal (1a), wherein the second seal comprises
a through shaft portion (12a) extending into a bore of the inner ring,
a radial portion (11a) extending along the radial extension of the bearing, covering the inner ring and at least part of the first seal, **characterised in that** the second seal comprises further
an annular groove (110a) arranged to interact with the annular lip of the first seal so as to create a labyrinth seal between the first and second seal, wherein the labyrinth seal seals a pocket (7a) between the inner ring, the second seal, and the first seal.

2. A bearing (6) according to claim 1, wherein the pocket (7a) contains a lubricant.

3. A bearing (6) according to claim 1 or 2, wherein the radial portion (11a) of the second seal (1a) covers at least 50%-, or at least 70%, or preferably 75-95% of the radial extension of the first seal (5a).

4. A bearing (6) according to claims 1 -3, wherein the first seal (5a) is constructed of an inner metal core and wherein the metal core is at least partly covered by a flexible material such as a polymer material.

5. A bearing (6) according to any one of claims 1-4, wherein the second seal (1a) is a bushing.

6. A bearing (6) according to claim 5, wherein the second seal (1a) being a bushing comprise a through-hole for receiving an axle adapted to be rotated in a rotational direction of the bearing.

7. A bearing according to any of claims 1-6, wherein the first seal (5a) is rotatably arranged relative to the inner ring (2) and second seal (1a) and fixedly arranged relative to the outer ring (3).

8. A bearing (6) according to any of claims 1-7, wherein the sealing device is form-fitted to the inner ring (2).

9. A bearing (6) according to claim 8, wherein the sealing device is form-fitted to the inner ring (2) by means of the second seal's (1a) through shaft portion (12a) having an outer diameter being adapted to be form fitted into the inner diameter of the inner ring's bore.

10. A bearing (6) according to any one of the preceding claims, wherein the annular groove (110a) of the second seal (1a) is placed on an inner surface, facing the first seal (5a), of the radial extension portion (11a) of the second seal.

11. A bearing (6) according to any of the preceding claims, wherein the second seal's (1a) through shaft portion (12a) extends at least into 40% of the total length of the inner ring's (2) bore, preferably at least 70% of the total length of the inner ring's bore and most preferably at least 90 % of the total length of the inner ring's bore.

12. A bearing (6) according to any of the preceding claims comprising a third seal (5b) being fitted between the inner (2) and outer ring (3) of the bearing, and on an opposite axial side of the first sealing (5a), and further comprising a fourth seal (1b) having a through shaft portion (12b) extending into the bore of the inner ring, a radial portion (11b) extending along the radial extension of the bearing and being arranged on an opposite axial side of the second sealing (1a), wherein the fourth seal (1b) comprise an annular groove (110b) arranged to interact with an annular lip (51b) of the third seal so as to create a labyrinth seal between the third and fourth seal.

13. A bearing (6) according to claim 12, wherein the third (5b) and fourth seal (1b), relative to the first (5a) and second seal (1a), are symmetrically arranged around a center radial axis of the bearing.

14. Use of a bearing (6) according to any of the preceding claims, wherein the bearing is oriented in a substantially horizontal orientation allowing substantially vertical rotations of an axle placed in the through hole (12a) of the second seal (1a), wherein the radial portion (11a) of the second seal is arranged to protect the top portion of the bore, when in use.

15. A cutting unit of a lawn mower comprising a bearing (6) according to any of claims 1-13 for allowing rotational cutting with said cutting unit.

## Patentansprüche

1. Lager (6), das einen inneren Ring (2), einen äußeren Ring (3) und dazwischenliegende Drehmittel (4) umfasst, wobei das Lager ferner eine Abdichtungsvorrichtung umfasst, die Folgendes umfasst:
eine erste Dichtung (5a), die zwischen dem inneren und dem äußeren Ring des Lagers angebracht ist und eine sich in Axialrichtung erstreckende ringförmige Lippe (51a) umfasst, und
eine zweite Dichtung (1a),
wobei die zweite Dichtung Folgendes umfasst:
einen Durchgangsschaftabschnitt (12a), der sich in einer Bohrung des inneren Rings erstreckt,
einen radialen Abschnitt (11a), der sich entlang der radialen Ausdehnung des Lagers erstreckt, wobei er den inneren Ring und wenigstens einen Teil der ersten Dichtung abdeckt, **dadurch gekennzeichnet, dass** die zweite Dichtung ferner Folgendes umfasst:
eine ringförmige Rille (110a), die dafür angeordnet ist, mit der ringförmigen Lippe der ersten Dichtung in Wechselwirkung zu treten, um so eine Labyrinthdichtung zwischen der ersten und der zweiten Dichtung zu erzeugen, wobei die Labyrinthdichtung eine Tasche (7a) zwischen dem inneren Ring, der zweiten Dichtung und der ersten Dichtung abdichtet.

2. Lager (6) nach Anspruch 1, wobei die Tasche (7a) ein Schmiermittel enthält.

3. Lager (6) nach Anspruch 1 oder 2, wobei der radiale Abschnitt (11a) der zweiten Dichtung (1a) wenigstens 50 % oder wenigstens 70 % oder vorzugsweise 75 bis 95 % der radialen Ausdehnung der ersten Dichtung (5a) abdeckt.

4. Lager (6) nach Anspruch 1 bis 3, wobei die erste Dichtung (5a) aus einem inneren Metallkern aufgebaut ist und wobei der innere Metallkern wenigstens teilweise durch ein flexibles Material, wie beispielsweise ein Polymermaterial, abgedeckt ist.

5. Lager (6) nach einem der Ansprüche 1 bis 4, wobei die zweite Dichtung (1a) eine Buchse ist.

6. Lager (6) nach Anspruch 5, wobei die zweite Dichtung (1a) eine Buchse ist, die ein Durchgangsloch zum Aufnehmen einer Achse umfasst, die angepasst ist, um in einer Drehrichtung des Lagers gedreht zu werden.

7. Lager nach einem der Ansprüche 1 bis 6, wobei die erste Dichtung (5a) drehbar im Verhältnis zu dem inneren Ring (2) und der zweiten Dichtung (1a) angeordnet ist und unbeweglich im Verhältnis zu dem äußeren Ring (3) angeordnet ist.

8. Lager (6) nach einem der Ansprüche 1 bis 7, wobei die Abdichtungsvorrichtung formschlüssig an dem inneren Ring (2) angebracht ist.

9. Lager (6) nach Anspruch 8, wobei die Abdichtungsvorrichtung mit Hilfe des Durchgangsschaftabschnitts (12a) der zweiten Dichtung (1a), der einen Durchmesser aufweist, der angepasst ist, um formschlüssig in dem Innendurchmesser der Bohrung des inneren Rings angebracht zu werden, formschlüssig an dem inneren Ring (2) angebracht ist.

10. Lager (6) nach einem der vorhergehenden Ansprüche, wobei die ringförmige Rille (110a) der zweiten Dichtung (1a) auf einer inneren Fläche, die zu der ersten Dichtung (5a) zeigt, des radialen Ausdehnungsabschnitts (11a) der zweiten Dichtung platziert ist.

11. Lager (6) nach einem der vorhergehenden Ansprüche, wobei sich der Durchgangsschaftabschnitt (12a) der zweiten Dichtung (1a) wenigstens in 40 % der gesamten Länge der Bohrung des inneren Rings (2), vorzugsweise wenigstens 70 % der gesamten Länge der Bohrung des inneren Rings und insbesondere wenigstens 90 % der gesamten Länge der Bohrung des inneren Rings erstreckt.

12. Lager (6) nach einem der vorhergehenden Ansprüche, das eine dritte Dichtung (5b) umfasst, die zwischen dem inneren (2) und dem äußeren Ring (3) des Lagers und auf einer entgegengesetzten axialen Seite der ersten Dichtung (5a) angebracht ist, und das ferner eine vierte Dichtung (1b) umfasst, die einen Durchgangsschaftabschnitt (12b) aufweist, der sich in die Bohrung des inneren Rings erstreckt, wobei sich ein radialer Abschnitt (11b) entlang der radialen Ausdehnung des Lagers erstreckt und auf einer entgegengesetzten axialen Seite der zweiten Dichtung (1a) angeordnet ist, wobei die vierte Dichtung (1b) eine ringförmige Rille (110b) umfasst, die dafür angeordnet ist, mit einer ringförmigen Lippe (51b) der dritten Dichtung in Wechselwirkung zu treten, um so eine Labyrinthdichtung zwischen der dritten und der vierten Dichtung zu erzeugen.

13. Lager (6) nach Anspruch 12, wobei die dritte (5b) und die vierte Dichtung (1b), im Verhältnis zu der ersten (5a) und der zweiten Dichtung (1a), symmetrisch um eine Mittelachse des Lagers angeordnet sind.

14. Verwendung eines Lagers (6) nach einem der vorhergehenden Ansprüche, wobei das Lager in einer im Wesentlichen horizontalen Ausrichtung ausgerichtet ist, was im Wesentlichen vertikale Drehungen einer Achse ermöglicht, die in dem Durchgangsloch (12a) der zweiten Dichtung (1a) platziert ist, wobei der radiale Abschnitt (11a) der zweiten Dichtung dafür angeordnet ist, den oberen Abschnitt der Bohrung zu schützen, wenn es in Verwendung ist.

15. Schneideinheit eines Rasenmähers, die ein Lager (6) nach einem der Ansprüche 1 bis 13 umfasst, zum Ermöglichen eines drehenden Schneidens mit der Schneideinheit.

## Revendications

1. Palier (6) comprenant une bague intérieure (2), une bague extérieure (3) et un moyen de rotation intermédiaire (4), ledit palier comprenant en outre un dispositif d'isolation étanche qui comprend
un premier joint d'étanchéité (5a) ajusté entre la bague intérieure et la bague extérieure du palier et comprenant une lèvre annulaire s'étendant axialement (51a), et
un second joint d'étanchéité (1a),
dans lequel le second joint d'étanchéité comprend
une portion d'arbre traversant (12a) s'étendant à l'intérieur d'un alésage de la bague intérieure,
une portion radiale (11a) s'étendant le long de l'extension radiale de palier, recouvrant la bague intérieure et au moins une partie du premier joint d'étanchéité, **caractérisé en ce que** le second joint d'étanchéité comprend en outre
une rainure annulaire (110a) agencée afin d'interagir avec la lèvre annulaire du premier joint d'étanchéité de manière à créer un joint labyrinthe entre le premier et le second joint d'étanchéité, dans lequel le joint labyrinthe isole de manière étanche une poche (7a) entre la bague intérieure, le second joint d'étanchéité et le premier joint d'étanchéité.

2. Palier (6) selon la revendication 1, dans lequel la poche (7a) contient un lubrifiant.

3. Palier (6) selon la revendication 1 ou 2, dans lequel la portion radiale (11a) du second joint d'étanchéité (1a) recouvre au moins 50 % au moins 70 % de préférence 75-95 % de l'extension radiale du premier joint d'étanchéité (5a).

4. Palier (6) selon les revendications 1-3, dans lequel le premier joint d'étanchéité (5a) est constitué d'un noyau métallique intérieur et dans lequel le noyau métallique est au moins partiellement recouvert par un matériau flexible tel qu'un matériau polymère.

5. Palier (6) selon une quelconque des revendications 1-4, dans lequel le second joint d'étanchéité (1a) est une bague de raccordement.

6. Palier (6) selon la revendication 5, dans lequel le second joint d'étanchéité (1a) étant une bague de raccordement comprend un alésage traversant pour recevoir un axe adapté pour être tourné dans une direction de rotation du palier.

7. Palier selon une quelconque des revendications 1-6, dans lequel le premier joint d'étanchéité (5a) est disposé rotativement par rapport à la bague intérieure (2) et au second joint d'étanchéité (1a) et disposé fixement par rapport à la bague extérieure (3).

8. Palier selon une quelconque des revendications 1-7, dans lequel le dispositif d'étanchéité est ajusté par complémentarité de forme à la bague intérieure (2).

9. Palier (6) selon la revendication 8, dans lequel le dispositif d'étanchéité est ajusté par complémentarité de forme à la bague intérieure (2) au moyen du second joint l'étanchéité (1a) à travers la portion d'arbre (12a) ayant un diamètre extérieur étant adapté pour être ajusté par complémentarité de forme au diamètre intérieur de l'alésage de bague intérieure.

10. Palier (6) selon une quelconque des revendications précédentes, dans lequel la rainure annulaire (110a) du second joint d'étanchéité (1a) est placée sur une surface intérieure, faisant face au premier joint d'étanchéité (5a), de la portion d'extension radiale (11a) du second joint d'étanchéité.

11. Palier (6) selon une quelconque des revendications précédentes, dans lequel le second joint l'étanchéité (1a) à travers la portion d'arbres (12a) s'étend au moins dans 40 % de la longueur totale du noyau de bague intérieure (2), de préférence au moins 70 % de la longueur totale du noyau de bague intérieure et de la manière la plus préférée au moins 90 % de la longueur totale du noyau de bague intérieure.

12. Palier (6) selon une quelconque des revendications précédentes comprenant un troisième joint d'étanchéité (5b) étant ajusté entre la bague intérieure (2) et la bague extérieure (3) du palier, et sur un côté axial opposé du premier joint d'étanchéité (5a) et comprenant en outre un quatrième joint d'étanchéité (1b) ayant une portion d'arbre traversant (12b) s'étendant à l'intérieur de l'alésage de la bague intérieure, une portion radiale (11b) s'étendant le long de l'extension radiale du palier étant disposée sur un côté axial opposé du second joint d'étanchéité (1a), dans lequel le quatrième joint d'étanchéité (1b) comprend une rainure annulaire (110b) disposée afin d'interagir avec une lèvre annulaire (51b) du troisième joint d'étanchéité de manière à créer un joint labyrinthe entre le troisième et le quatrième joint d'étanchéité.

13. Palier (6) selon la revendication 12, dans lequel le troisième (5b) et le quatrième (1b) joint d'étanchéité par rapport au premier (5a) et au second (1a) joint d'étanchéité sont disposés symétriquement autour d'un axe radial central du palier.

14. Utilisation d'un palier (6) selon une quelconque des revendications précédentes, dans lequel le palier est orienté dans une orientation substantiellement horizontale permettant une rotation substantiellement verticale d'un axe placé dans l'alésage traversant (12a) du second joint d'étanchéité (1a), dans lequel la portion radiale (11a) du second joint d'étanchéité est agencée pour protéger la portion de sommet de l'alésage, pendant l'utilisation.

15. Unité de coupe d'une tondeuse à gazon comprenant un palier (6) selon une quelconque des revendications 1-13 pour permettre une coupe additionnelle avec ladite unité de coupe.
